(19) Europäisches Patentamt
European Patent Office
Office européen des brevets

(11) EP 3 504 565 B1

(12) **EUROPEAN PATENT SPECIFICATION**

(45) Date of publication and mention of the grant of the patent:
**26.06.2024 Bulletin 2024/26**

(21) Application number: **17853402.0**

(22) Date of filing: **20.09.2017**

(51) International Patent Classification (IPC):
***G02B 1/04*** *(2006.01)* ***G02B 5/30*** *(2006.01)*
***C09D 5/00*** *(2006.01)* ***C09D 133/26*** *(2006.01)*

(52) Cooperative Patent Classification (CPC):
**G02B 5/305; C08J 7/0427; C08J 7/044; C08J 7/046; C08J 7/056; G02B 1/14;**
C08J 2301/12; C08J 2333/08; C08J 2333/24; C08J 2433/08; C08J 2433/24

(86) International application number:
**PCT/KR2017/010297**

(87) International publication number:
**WO 2018/056688 (29.03.2018 Gazette 2018/13)**

# (54) DISPLAY DEVICE EMPLOYING POLYMER FILM

ANZEIGEVORRICHTUNG MIT POLYMERFILM

DISPOSITIF D’AFFICHAGE UTILISANT UN FILM POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2016 JP 2016184864**
**28.08.2017 KR 20170108851**

(43) Date of publication of application:
**03.07.2019 Bulletin 2019/27**

(73) Proprietor: **Samsung Electronics Co., Ltd.**
**Suwon-si, Gyeonggi-do 16677 (KR)**

(72) Inventor: **KOBORI, Shigeto**
**Yokohama**
**Kanagawa 230-0027 (JP)**

(74) Representative: **Taor, Simon Edward William et al**
**Venner Shipley LLP**
**200 Aldersgate**
**London EC1A 4HD (GB)**

(56) References cited:
**JP-A- 2005 298 716**
**JP-A- 2009 035 595**
**JP-A- 2009 035 595**
**JP-A- 2012 245 736**
**JP-A- 2013 136 222**
**JP-A- 2016 155 992**
**KR-B1- 101 416 610**
**KR-B1- 101 626 618**
**US-A1- 2011 217 541**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 504 565 B1

## Description

### Technical Field

Exemplary embodiments consistent with the present disclosure relates to a display device employing a polymer film, and more particularly, to a polarization member of a display, and a display device employing a polymer film in which metal oxide particles are localized to a great degree.

### Background Art

In a display device, an optical member, such as a polarization member, may be provided on a surface of a display unit. For example, a display device including a liquid crystal panel may have a polarization film at an outermost surface thereof. A surface of the polarization film may be, for example, formed of a triacetyl cellulose (TAC) film. However, since the TAC film is susceptible to being scratched, a hard coat layer may be disposed on the TAC film so as to prevent the TAC film from being scratched. Here, to prevent scratches, metal oxide particles are generally included in the hard coat layer.

Also, the polarization film may have an anti-reflection function to suppress reflection of an image of objects inside and outside a room on a screen of the display device. In this regard, a low refractive layer for suppressing reflection of light incident from the outside may be disposed on the hard coat layer. In this case, in order to suppress the reflection of an image of objects inside and outside a room on a screen of the display device, it is desirable that the hard coat layer has a relatively high refractive index. To this end, attempts have been made to localize metal oxide particles in the hard coat layer. Attempts have also been made to form a multi-layered hard coat layer.

JP 2007-023107 discloses an antistatic hard coat layer formed of a composition including conductive fine particles and a binder. The binder includes a sufficient amount of hydroxyl groups for the conductive fine particles to localize in the antistatic hard coat layer.
JP200935595, JP2005298716, US20110217541, and JP2012245736 disclose a substrate with a hard coat film.

[Disclosure]

[Technical Problem]

However, by using conventional methods, it is hard to localize the metal oxide particles in the hard coat layer to a sufficient degree. Further, in order to form a multi-layered hard coat layer, separate processes of coating each layer are necessary. Therefore, when a multi-layered hard coat layer is produced, the productivity is poor, and the manufacturing cost is likely to be relatively high.

[Technical Solution]

According to the invention, a device is provided according to claim 1. Additional features are set out in claims 2 to 5.

A method of forming a polymer film includes a coating solution preparation process for preparing a coating solution for forming a polymer film; a coating process for coating the coating solution on a substrate for forming the polymer film; a drying process for drying the coated coating solution to form a coating film; and a curing process for curing the coating film to form the polymer film.

In the coating solution preparation process, as described above, the coating solution for forming a polymer film is prepared, which includes a first component, a second component, metal oxide particles, and a solvent. The first component is at least one of a monomer and an oligomer, wherein the monomer and the oligomer each include an acrylamide skeleton and at least one photopolymerizable functional group in one molecule. The second component is a monomer including at least two photopolymerizable functional groups in one molecule. The first component is hydrophilic. The first component, the second component, and the metal oxide particles are dispersed and/or dissolved in the solvent. A hydrophilicity of the first component is greater than that of the second component and a hydrophilicity of the second component is greater than that of the metal oxide particles. The solvent may include a first solvent having a relatively low boiling point and a second solvent having a relatively high boiling point. The first solvent may be isopropyl alcohol, and the second solvent may be diacetone alcohol.

The coating solution preparation process may be performed by following (i), (ii), and (iii) steps in this stated order to mix the first component, the second component, the metal oxide particles, and the solvent, thereby preparing a coating solution: (i) The first component is mixed with the first solvent, and the second component is mixed with the second solvent. (ii) The metal oxide particles are added to and mixed with a mixture of the second component and the

second solvent. (iii) A mixture of the first component and the first solvent is mixed with a mixture of (ii).

The coating solution may further include an antistatic agent and a polymerization initiator. The antistatic agent may be mixed with at least one of the first component, the first solvent, and a mixture of the first component and the first solvent. The polymerization initiator may be mixed with at least one of the second component, the second solvent, and a mixture of the second component and the second solvent. In the coating solution, a total weight of the first component, the second component, the metal oxide particles, the antistatic agent, and the polymerization initiator may be in a range of about 1 part by weight or greater and about 80 parts by weight or less, based on 100 parts by weight of the coating solution.

In the coating process, the coating solution is coated on the substrate to form a polymer film.

In the drying process, a proportion of the first component gradually decreases from the surface portion located toward the substrate to the other surface portion opposite the surface portion, such that phase separation between the first component and the second component may occur.

In the curing process, the first component is photopolymerized with the second component to form a polymer film. That is, via the curing process, the coating film is cured to form a polymer film or a polymer layer.

## Advantageous Effects of Invention

According to the present disclosure, a display device employing a polymer film in which metal oxide particles are localized to a great degree can be obtained.

## Brief Description of Drawings

This will become apparent and more readily appreciated from the following description of the exemplary embodiments, taken in conjunction with the accompanying drawings in which:

FIG. 1A is a view that illustrates an exemplary embodiment of a display device; FIG. 1B is a cross-sectional view, taken along line Ib-Ib of FIG. 1A, which illustrates an exemplary embodiment of a structure of a display screen; FIG. 1C is an enlarged view of FIG. 1B, the enlarged view showing an outermost portion of the display screen;
FIG. 2 is a graph showing the relationship between a thickness of a hard coat layer and a refractive index;
FIG. 3A illustrates an exemplary embodiment of a structure of a hard coat layer; FIG. 3B illustrates a proportion of each of a first polymer component and a second polymer component along a thickness direction of the layer or film;
FIG. 4 illustrates another example of a structure of a hard coat layer not according to the invention;
FIG. 5 is a graph showing the relationship between an amount of an antistatic agent, pencil hardness, and a surface resistance value;
FIG. 6 is a flowchart that illustrates an exemplary method of forming a hard coat layer;
FIG. 7 is a graph showing a reflectance spectrum;
FIG. 8 is a table that illustrates properties of Examples and Comparative Examples;
FIG. 9 is a table that illustrates properties of Examples and Comparative Examples;
FIG. 10 is a table that illustrates properties of Examples and Comparative Examples; and
FIG. 11 is a table that illustrates properties of Examples and Comparative Examples;

## Best Mode for Carrying out the Invention

Reference will now be made in detail to exemplary embodiments, examples of which are illustrated in the accompanying drawings, wherein like reference numerals refer to like elements throughout. Accordingly, the exemplary embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list. Further, as used herein and in the claims, where the term "about" is used with a numerical value, the numerical value may vary by ±50%. The variation may also be ±40%, ±30%, ±20%, ±10%, ±5%, ±4%, ±3%, ±2% or ±1%.

Hereinafter, reference will now be made in detail to exemplary embodiments. The accompanying drawings, which are included to provide a further understanding, illustrate exemplary embodiments and are not necessarily drawn to actual scale.

<Description of display device>

FIG. 1A is a view that illustrates an exemplary embodiment of a display device. Examples of the display device 1 include a liquid crystal display for a personal computer (PC) and a liquid crystal television. The display device 1 displays

an image on a display screen 1a.

<Description of liquid crystal panel>

FIG. 1B is a cross-sectional view, taken along line Ib-Ib of FIG. 1A, which illustrates an exemplary embodiment of a structure of the display screen 1a.

The display screen 1a includes a liquid crystal panel E; and a hard coat layer 12 (the polymer film or polymer layer above) and a low refractive layer 13 formed on a surface of the liquid crystal panel E. The liquid crystal panel E is an example of a display means, e.g., a display, that displays an image. As shown in the drawing, the liquid crystal panel E includes a liquid crystal L; polarization films D disposed on and under the liquid crystal L; and a backlight B disposed under the lower polarization film D.

The upper and lower polarization films D are examples of a polarizing means, e.g., polarization layer, that polarizes light, and directions of light being polarized by the upper and lower polarization films D may be perpendicular to each other. For example, the polarizing films D may include a polymer film including molecules of an iodine compound in a polyvinyl alcohol (PVA). Also, the polymer film is inserted between, and is bonded to, two polymer films formed of triacetyl cellulose (TAC). Light is polarized by the molecules of an iodine compound included in the polarization films D. Examples of the backlight B include a cold cathode fluorescent lamp or a white light-emitting diode (LED).

A power source (not shown) is connected to the liquid crystal L, and when a voltage is applied by the power source, an arrangement direction of the liquid crystal L changes. When light is emitted from the backlight B, light is first transmitted through the lower polarization film D, and thus light is polarized. When the liquid crystal panel E is a TN-type liquid crystal panel, the polarized light is transmitted through the liquid crystal panel E while the voltage is applied to the liquid crystal panel E. The upper polarization film D has a different polarizing direction and thus blocks the polarized light. A polarizing direction of the polarized light rotates 90° according to a function of the liquid crystal panel E when a voltage is not applied to the liquid crystal panel E. In this regard, the upper polarization film D does not block the polarized light and transmits the polarized light. Thus, an image may be displayed by controlling light transmission according to whether a voltage is applied to the liquid crystal panel E or not. A color image (not shown) may be displayed by using a color filter. Here, the polarization film D with the hard coat layer 12 and the low refractive layer 13 is an example of a polarizing member.

FIG. 1C is an enlarged view of FIG. 1B and illustrates an outermost portion of the display screen 1a.

In FIG. 1C, the substrate 11, the hard coat layer 12, and the low refractive layer 13 are shown. The substrate 11 is the outermost layer of the polarization film D. In some exemplary embodiments, one of the substrate 11, the hard coat layer 12, and the low refractive layer 13 may be used as a protection film 10. When the substrate 11, the hard coat layer 12, and the low refractive layer 13 are used as the protection film 10, the protection film 10 protects the polarization film D. In this case, the protection film 10 is an example of an optical member in this exemplary embodiment.

The substrate 11 may be a supporting member for forming the hard coat layer 12 and the low refractive index layer 13. The substrate 11 may be a transparent substrate having total luminous transmittance of about 85% or higher. The substrate 11 may be, for example, TAC as described above. However, exemplary embodiments are not limited thereto. In some exemplary embodiments, the substrate 11 may be polyethylene terephthalate (PET). However, in this exemplary embodiment, the substrate 11 may advantageously be TAC. The substrate 11 may have a thickness, for example, in a range of about 20 micrometers ($\mu$m) or greater and about 200 micrometers ($\mu$m) or less.

The hard coat layer 12 may be a functional layer for preventing scratches on the substrate 11. The hard coat layer 12 has a structure that contains metal oxide particles 121 in a binder 122 as a base material, wherein the binder 122 has a polymer as a main component. When the metal oxide particles 121 are contained in the binder, a hard coat property may be imparted to the hard coat layer 12. In this exemplary embodiment, the hard coat layer 12 may have a thickness of about 1 $\mu$m to about 15 $\mu$m, for example, about 1 $\mu$m to about 11 $\mu$m. In this exemplary embodiment, examples of the metal oxide particles 121 may include tin oxide, titanium oxide, or cerium oxide.

When a thickness of the hard coat layer 12 is less than about 1 $\mu$m, it may be hard to prevent the substrate 11 from having scratches thereon. When a thickness of the hard coat layer 12 is greater than about 15 $\mu$m, the hard coat layer 12 may have a low refractive index. That is, as described below, the low refractive index layer 13 is a layer for suppressing reflection, and to this end, it is desirable that a difference between a refractive index of the hard coat layer 12 and that of the low refractive index layer 13 is relatively great. In some exemplary embodiments, it may be desirable that a refractive index of the hard coat layer 12 may be relatively great, and a refractive index of the low refractive index layer 13 may be relatively small. When a refractive index of the hard coat layer 12 is relatively small, it may be hard for the low refractive index layer 13 to suppress reflection.

FIG. 2 is a graph showing the relationship between a thickness of the hard coat layer 12 and a refractive index.

In FIG. 2, the x-axis represents a film thickness of the hard coat layer 12, and the y-axis represents a refractive index of the hard coat layer 12. As shown in FIG. 2, when a thickness of the hard coat layer 12 is in a range of about 1 $\mu$m to about 11 $\mu$m, the refractive index thereof is about 1.64. However, when a thickness of the film greater than 11

$\mu$m, the refractive index gradually decreases. When a thickness of the film is excessively great, it may be hard to cause phase separation as is described below.

The low refractive index layer 13 is a functional layer for preventing reflection while being irradiated with light from an external source. The low refractive index layer 13 has a structure that contains hollow silica particles 131 in a binder 132, wherein the binder 132 has a polymer as a main component. A fluorine-containing polymer layer 133 is disposed on the other surface portion (the upper side in FIG. 1C) of the low refractive index layer 13.

The low refractive index layer 13 may have a refractive index of, for example, about 1.50 or less. In this exemplary embodiment, the low refractive index layer 13 may have a thickness of, for example, about 100 nm to about 150 nm.

Each of the hollow silica particles 131 may have an outer portion of silica (silicon dioxide, $SiO_2$) in an approximately spherical form. Each of the hollow silica particles 131 may have a hollow portion therein. The hollow silica particles 131 may have a median particle diameter in a range of about 10 nm to about 120 nm. By including the hollow silica particles 131, the low refractive index layer 13 may have a low refractive index. Accordingly, the low refractive index layer 13 may have a function of preventing reflection while being irradiated with light from an external source.

The binder 132 of the low refractive index layer 13 may have a network structure which connects the hollow silica particles 131 to one another. The binder 132 includes, for example, a photocurable fluorine-containing polymer. The photocurable fluorine-containing polymer is prepared by photopolymerizing a photopolymerizable fluorine-containing monomer.

The fluorine-containing polymer layer 133 may include a fluorine polymer. The fluorine polymer may be prepared by photopolymerizing a photopolymerizable fluorine-containing polymer. The fluorine polymer is an additive which imparts an antifouling property and a slippery property to the low refractive layer 13.

<Description of structure of hard coat layer>

Hereinafter, the hard coat layer 12 (also referred to herein as the polymer film or polymer layer) will be described in detail.

FIG. 3A illustrates an exemplary embodiment of a structure of the hard coat layer or hard coat film 12. As described above, the hard coat layer 12 has a structure that contains the metal oxide particles 121 in the binder 122.

In this exemplary embodiment, the metal oxide particles 121 are unevenly distributed with a greater concentration toward at least one of a surface portion and the other surface portion opposite the surface portion. Here, the surface portion indicates the substrate 11 side of the hard coat layer 12, i.e., the lower side in FIG. 3A. The other surface portion is opposite the substrate 11 side of the hard coat layer 12 (the low refractive index layer 13 side), i.e., the upper side in FIG. 3A. FIG. 3A illustrates an example where the metal oxide particles 121 are unevenly distributed with a greater concentration toward the other surface portion (the upper side in FIG. 3A). In FIG. 3A, the metal oxide particles 121 may have, for example, a thickness of about 500 nm or less, in some exemplary embodiments, a thickness in a range of about 100 nm to about 200 nm, and in some exemplary embodiments, a thickness of about 150 nm.

By localizing the metal oxide particles 121 in this portion, the refractive index may increase. Accordingly, a difference between a refractive index of the hard coat layer 12 and that of the low refractive index layer 13 becomes greater. Consequently, the low refractive index layer 13 may exhibit improved suppression effects of reflection.

The localization of the metal oxide particles 121 toward the other surface portion (the upper side in FIG. 3A) results from the hydrophobicity of the metal oxide particles 121. Therefore, the metal oxide particles 121 may bleed out from a first polymer component 122a, which is hydrophilic and described below. Accordingly, the metal oxide particles 121 are localized toward the other surface portion (the upper side in FIG. 3A) having the lowest concentration of the first polymer component 122a.

In examples not according to the invention, a surface of the metal oxide particles 121 may be treated to thereby render the surface of the metal oxide particles 121 hydrophilic. In this case, the metal oxide particles 121 may bleed out from a second polymer component 122b, which is hydrophobic and described below. Accordingly, in such a case, the metal oxide particles 121 may be localized toward the surface portion (the lower side in FIG. 3A) having the lowest concentration of the second polymer component 122b.

In some examples not according to the invention, by using a combination of metal oxide particles 12 having hydrophobicity and metal oxide particles 12 having hydrophilicity, the metal oxide particles 121 may be localized toward both the surface portion (the lower side in FIG. 3A) and other surface portion (the upper side in FIG. 3A).

The binder 122 includes both the first polymer component 122a, which is hydrophilic, and the second polymer component 122b, which is hydrophobic relative to the first polymer component 122a. The first polymer component 122a and the second polymer component 122b are miscible with each other. In addition, a proportion of the first polymer component 122a gradually decreases from the surface portion (the lower side in FIG. 3A) to the other surface portion (the upper side in FIG. 3A) opposite the surface portion. In contrast, a proportion of the second polymer component 122b gradually increases from the surface portion (the lower side in FIG. 3A) to the other surface portion (the upper side in FIG. 3A). That is, the first polymer component 122a is mainly distributed toward the surface portion (the lower side in

FIG. 3A), and the second polymer component 122b is mainly distributed toward the other surface portion (the upper side in FIG. 3A).

A distribution of the first polymer component 122a mainly toward the surface portion (the lower side in FIG. 3A) can result from a high affinity thereof for the substrate 11. For example, TAC may be used in the substrate 11, and TAC is hydrophilic. Accordingly, the first polymer component 122a, which is also hydrophilic, is mainly distributed toward the substrate 11 (the lower side in FIG. 3A). The second polymer component 122b is hydrophobic. Accordingly, affinity of the second polymer component 122b with the first polymer component 122a and the substrate 11 is not high. Consequently, phase separation between the second polymer component 122b and the first polymer component 122a may occur, and thus the second polymer component 122b is mainly distributed toward the other surface portion (the upper side in FIG. 3A) opposite the substrate 11.

However, in exemplary embodiments, a phase of the first polymer component 122a is not completely separated from that of the second polymer component 122b.

FIG. 3B illustrates a proportion of each of the first polymer component 122a and the second polymer component 122b along a thickness direction of the layer or film. In FIG. 3B, the x-axis represents a length of the thickness direction of the film, i.e., a distance from the surface of the substrate 11. The y-axis represents the proportion of the first polymer component 122a and the second polymer component 122b. As shown in FIG. 3B, the first polymer component 122a occupies most of a region near the substrate 11 (a region having a relatively short distance from the substrate 11), and the second polymer component 122b scarcely exists therein. The second polymer component 122b occupies most of a region relatively far from the substrate 11 (a region having a relatively great distance from the substrate 11), and the first polymer component 122a scarcely exists therein. Between the foregoing two regions, a mixed layer is present where a proportion of the first polymer component 122a and that of the second polymer component 122b abruptly alternates. That is, in the mixed layer, the first polymer component 122a and the second polymer component 122b are miscible with each other.

Due to the presence of this mixed layer, it is possible to prevent the first polymer component 122a and the second polymer component 122b from forming a sea-island structure. In other words, when a complete phase separation occurs, it may be easy to form a structure where the second polymer component 122b is distributed in the form of islands in the first polymer component 122a.

An amount of the first polymer component 122a in the hard coat layer 12 is about 20 percent by weight (wt%) or greater based on a total weight of the hard coat layer 12. An amount of the second polymer component 122b in the hard coat layer 12 is about 5 wt% or greater based on a total weight of the hard coat layer 12. Accordingly, it may be easy to form a structure where a phase of the first polymer component 122a is separated from that of the second polymer component 122b, as shown in FIG. 3A.

FIG. 4 illustrates another example of a structure of the hard coat layer 12 not according to the invention. The hard coat layer 12 as illustrated may be formed when an amount of the first polymer component 122a is less than about 20 wt% in the hard coat layer 12. In addition, the hard coat layer 12 as illustrated may be formed when an amount of the second polymer component 122b is less than about 5 wt% in the hard coat layer 12. In this case, although a mixed layer is present therein, the metal oxide particles 121 is likely to be dispersed toward the surface portion (the lower side in FIG. 4). Consequently, as compared with FIG. 3A, the metal oxide particles 121 may be distributed toward the surface portion (the lower side in FIG. 4) as well as toward the other surface portion (the upper side in FIG. 4). In this case, a refractive index of the other surface portion (the upper side in FIG. 4) may become relatively low, as compared with that in FIG. 3A.

The hard coat layer 12 may further have an antistatic function. When the hard coat layer 12 includes an antistatic function, dust in the air may not attach well to the hard coat layer 12, and dirt may not easily accumulate on the hard coat layer 12 when the display device 1 is used. In addition, dust in the air may not easily attach to the hard coat layer 12 when the hard coat layer 12 is formed on the substrate 11. Thereby, the hard coat layer 12 may be formed easily, and the yield may easily improve during the formation of the hard coat layer 12.

When manufacturing the display device 1, a product protection film, also as called as a protect film, may be affixed to the display screen 1a. The product protection film protects the liquid crystal panel E and prevents contamination when shipping and distributing the display device 1. The product protection film is affixed to the top of the hard coat layer 12 or the low refractive index layer 13. When a user uses the display device 1, the product protection film may be detached. However, when a user detaches the product protection film, static electricity is generated, which may cause scratches on the hard coat layer 12 and the low refractive index layer 13. When the hard coat layer 12 has an antistatic function, this phenomenon may be suppressed. In this respect, the hard coat layer 12 may have an antistatic function. Accordingly, the hard coat layer 12 in this exemplary embodiment further includes an antistatic agent.

Since an antistatic agent is hydrophobic, the antistatic agent is unevenly distributed with a greater concentration toward the other surface portion (the upper side in FIG. 3A), in addition to the metal oxide particles 121. In other words, distribution of the antistatic agent is nearly the same as that of the metal oxide particles 121. Thus, an amount of the antistatic agent added may be further reduced. For example, a similar degree of an antistatic function may be exhibited

even at an addition amount of 1/5, as compared with a case where the antistatic agent is not localized.

As described below, the first polymer component 122a and the second polymer component 122b are formed by photopolymerizing a monomer or an oligomer of a raw material. Therefore, the hard coat layer 12 may further include a photopolymerization initiator as a polymerization initiator for polymerizing the monomer or the oligomer.

<Description of method of forming hard coat layer>

The method of forming the hard coat layer 12 includes a process of coating a coating solution for forming the hard coat layer 12 on the substrate 11. The coating solution includes the metal oxide particles 121, a monomer (or an oligomer) that will form or constitute the binder 122, and an antistatic agent. The monomer (or the oligomer) includes a first component and a second component as described below. The coating solution may further include a photopolymerization initiator. The coating solution may include a solvent that dissolves and/or disperses these components above.

(Metal oxide particles)

The metal oxide particles 121 are not particularly limited as long as the metal oxide particles 121 are fine particles made of a metal oxide. Examples of the metal oxide particles 121 include at least one selected from antimony pentoxide ($Sb_2O_5$), antimony trioxide ($Sb_2O_3$), zirconium oxide ($ZrO_2$), titanium oxide ($TiO_2$), tin oxide ($SnO_2$), and cerium oxide ($CeO_2$).

The metal oxide particles 121 may have a median diameter of about 500 nm or less, e.g., a median diameter in a range of about 100 nm to about 200 nm, and in some exemplary embodiments, a median diameter in a range of about 1 nm to about 30 nm. The metal oxide particles 121 may be, for example, in spherical form, but exemplary embodiments are not limited thereto. The metal oxide particles 121 may be, for example, in a needle-shape form, in a chain-shaped form in which particles are interconnected, or in an irregular or random form. The metal oxide particles 121 may also have a mixed form.

The metal oxide particles 121 may be surface-treated, or the metal oxide particles 121 may not be surface-treated. That is, a surface of the metal oxide particles 121 may be such that metal oxide is exposed. However, when the metal oxide particles 121 are imparted with hydrophilicity as described above and not according to the invention, a surface treatment may be performed.

An amount of the metal oxide particles 121 is in a range of about 0.1 parts to about 10 parts by weight based on 100 parts by weight of the total weight of the hard coat layer 12. When an amount of the metal oxide particles 121 is less than about 0.1 parts by weight, a hard coat property of the hard coat layer 12 may be poor. Consequently, it is hard for the hard coat layer 12 to exhibit a function that prevents the substrate 11 from being scratched. When an amount of the metal oxide particles 121 is greater than about 10 parts by weight, much optical interference may occur in a visible light region due to an increase in film thickness of a localized portion. Therefore, the optical interference is likely to be recognized as a stain from the perspective of an observer. This is a factor of cosmetic defect or appearance defect.

(First component)

The first polymer component 122a in the binder 122 is based on at least one of a monomer and an oligomer (the first component). The monomer or the oligomer has an acrylamide skeleton and at least one photopolymerizable functional group in a molecule. The first component is hydrophilic. The term "hydrophilicity" as used herein refers to a solubility with respect to water of about 20 wt% or greater.

Hydrophilicity is a property of being easily dissolved in water or easily mixed with water by forming a hydrogen bond with water. This phenomenon is thermodynamically favorable (reducing free energy). A hydrophilic molecule is soluble in polar solvents in addition to water. A hydrophilic molecule or a hydrophilic group may form a hydrogen bond due to its polarity. Thus, a hydrophilic molecule may be more soluble in water than in oil or a hydrophobic solvent. A hydrophilic molecule may be, for example, methanol, ethanol, propanol, or the like. A hydrophilic group may be, for example, a carboxylic group or an carboxylic acid residue in a fatty acid or the like.

Due to the acrylamide skeleton, the first component is hydrophilic. The first component is at least one of a monomer and an oligomer, or a mixture of the monomer and the oligomer. A molecular weight of the first component may be 1,000 or less. Accordingly, in forming the hard coat layer 12, the first component may easily move within the layer, and phase separation with respect to the second component may easily occur. Thus, it may be easy to form a structure where a phase of the first polymer component 122a is separated from that of the second polymer component 122b, as shown in FIG. 3A.

Formula (1) below represents an acrylamide skeleton. The first component may be a primary amide represented by Formula (2) ($R^1$-$NH_2$), a secondary amide represented by Formula (3) ($R^1$-$NHR^2$), or a tertiary amide represented by Formula (4) ($R^1$-$NR^2R^3$). Here, $R^1$ may be an acryloyl group or a methacryloyl group. $R^2$ and $R^3$ may each independently

be, for example, a $C_1$-$C_{18}$ alkyl group, a $C_1$-$C_{12}$ alkyl group, a $C_1$-$C_6$ alkyl group, or a $C_1$-$C_4$ alkyl group. The alkyl group may be a linear alkyl group, a branched alkyl group, or a cyclic alkyl group.

Examples of the compounds represented by one of Formulae (2) to (4) include (meth)acrylamides, such as (meth)acrylamide, N-alkyl (meth)acrylamide, (meth)acrylamides containing an amino group or N,N-dialkyl (meth)acrylamide, etc. Examples of N-alkyl (meth)acrylamides may include N-ethyl (meth) acrylamide, N-n-butyl (meth)acrylamide, or N-octyl acrylamide. Examples of (meth)acrylamides containing an amino group include dimethylaminoethyl (meth)acrylamide or diethylaminoethyl (meth)acrylamide. Examples of N,N-dialkyl (meth)acrylamides include N,N-dimethyl (meth)acrylamide, N,N-diethyl (meth)acrylamide, N,N-dipropyl (meth)acrylamide, N,N-diisopropyl (meth)acrylamide, N,N-di(n-butyl) (meth)acrylamide, and N,N-di(t-butyl) (meth)acrylamide.

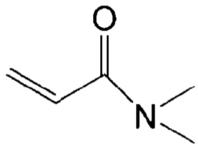
(1)

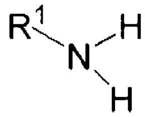
(2)

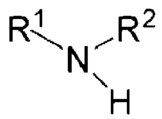
(3)

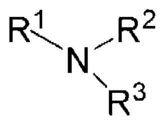
(4)

The first component may be, for example, at least one selected from N,N-dimethyl acrylamide (DMAA), N,N-diethyl acrylamide (DEAA), N-n-butoxymethyl acrylamide (NBMA), N,N'-methylene bisacrylamide (MBAA), N-methoxymethyl acrylamide (NMMA), and N-isobutoxymethyl acrylamide (IBMA). In some exemplary embodiments, the first component may be, for example, at least one selected from N-(2-hydroxyethyl) acrylamide (HEAA), 4-acryloyl morpholine (ACMO), diacetone acrylamide (DAMM), and N-t-butyl acrylamide (TBAA).

An amount of the first component is in a range of about 20 parts to about 90 parts by weight based on 100 parts by weight of the total weight of the hard coat layer 12. When the first component is less than about 20 parts by weight or greater than about 90 parts by weight, phase separation as shown in FIG. 3A may be hard to occur.

(Second component)

A monomer (the second component), which includes at least two photopolymerizable functional groups in a molecule, forms or constitutes the second polymer component 122b in the binder 122. The second component is hydrophobic relative to the first component. The term "hydrophobicity" as used herein refers to a solubility with respect to water of about 10 wt% or less.

Hydrophobicity is a property of a material or (a part of) a molecule having relatively low affinity for water, i.e., insoluble in water or immiscible with water. A hydrophobic material is in general an electrically neutral nonpolar material. An example thereof is a material having a hydrocarbon group in a molecule. The term "lipophilic", which indicates the affinity between lipid and a nonpolar organic solvent, is often used as a synonym for hydrophobicity; however, hydrophobic materials are not all lipophilic. For example, compounds with silicon and fluoroalkyl chains are some exceptions.

A molecular weight of the second component may be about 3,000 or less, and in some exemplary embodiments, about 2,000 or less. Accordingly, in forming the hard coat layer 12, the second component may easily move within the layer, and phase separation with the first component may easily occur. Thus, it may be easy to form a structure where a phase of the first polymer component 122a is separated from that of the second polymer component 122b, as shown in FIG. 3A.

Examples of the second component include at least one selected from pentaerythritol tetraacrylate (TMMT), dipentaerythritol hexaacrylate, tricyclodecane dimethanol diacrylate (DCPA), ethoxylated isocyanuric acid triacrylate,

ethoxylated isocyanuric acid diacrylate, trimethylol propane triacrylate (TMPTA), and pentaerythritol triacrylate.

The binder 122 is a product of mixing and photopolymerizing of the first component and the second component. When the first component and the second component are mixed with each other and coated, phase separation between the first component and the second component occurs. Upon photopolymerization, the first component photopolymerises with the second component. In addition, the first component photopolymerises with other first components, and the second component photopolymerises with other second components. Consequently, the binder 122 is formed as described above.

An amount of the second component is in a range of about 5 parts to about 90 parts by weight, based on 100 parts by weight of the total weight of the hard coat layer 12. When the second component is less than about 5 parts by weight or greater than about 90 parts by weight, phase separation as shown in FIG. 3A may be hard to occur.

(Antistatic agent)

The antistatic agent that imparts an antistatic function to the hard coat layer 12 is not particularly limited, and a commonly used antistatic agent may be used. For example, polyethylene dioxythiophene (PEDOT) or quaternary ammonium salt polymer may be used as an antistatic agent.

An amount of the antistatic agent may be in a range of about 0.1 parts to about 10 parts by weight, and in some exemplary embodiments, about 1.5 parts to about 3 parts by weight based on 100 parts by weight of the total weight of the hard coat layer 12. When an amount of the antistatic agent is less than about 0.1 parts by weight, the antistatic agent may not impart an antistatic function to the hard coat layer 12. When an amount of the antistatic agent is greater than about 10 parts by weight, the hard coat layer 12 may have an insufficient hard coat property. Consequently, it is hard for the hard coat layer 12 to exhibit a function that prevents the substrate 11 from being scratched. In addition, when an amount of the antistatic agent is greater than about 10 parts by weight, the hard coat layer 12 may have a poor light transmitting property, which may cause a haze.

FIG. 5 is a graph showing the relationship between an amount of an antistatic agent, pencil hardness, and a surface resistance value. In FIG. 5, the x-axis represents an amount of an antistatic agent. The y-axis represents a pencil hardness or a surface resistance value.

The pencil hardness is measured as follows: A pencil is installed at an angle of 45° with respect to the hard coat layer 12 such that a pencil lead presses the hard coat layer 12. The pencil lead is controlled to be exposed at a length of about 5 mm to about 6 mm. A front end part of the pencil lead is ground to be flattened by using sandpaper. A load of about 500 g is at the front end part of the pencil lead. The pencil is moved at a rate of about 0.8 millimeters per seconds (mm/s) and to a distance of at least about 7 millimeters (mm). Then, scratches made on the hard coat layer 12 are observed by the naked eye. These may be sequentially performed by changing the pencil and varying the hardness of the pencil lead from 6B to 6H. A hardness of the pencil lead that was the greatest hardness at which no scratches were made was determined as a pencil hardness. A greater pencil hardness indicates that the hard coat layer 12 is harder.

As shown in FIG. 5, as an amount of the antistatic agent increases, a surface resistance value decreases. That is, as an amount of the antistatic agent increases, it becomes more hard for the hard coat layer 12 to be charged. As an amount of the antistatic agent increases, a pencil hardness decreases. That is, as an amount of the antistatic agent increases, a hard coat property of the hard coat layer 12 deteriorates. In this respect, an amount of the antistatic agent may be in a range of about 1.5 parts by weight or greater and about 3 parts by weight or less. When an amount of the hard coat layer 12 is within these ranges, 2H or higher pencil hardness as well as satisfactory antistatic function may be achieved.

A method of imparting an antistatic function to the hard coat layer 12 is not limited to a method of adding the antistatic agent. For example, a conductive material may be added to the metal oxide particles 121. The conductive material is, for example, a metal element. More specifically, the conductive material is, for example, antimony (Sb) or phosphorus (P). In this case, examples of the metal oxide particles 121 to which the conductive material is added include antimony tin oxide (ATO) or phosphorus tin oxide (PTO). In addition, the conductive material is not limited to one kind, and two or more conductive materials may be added. Consequently, a surface resistance value of the hard coat layer 12 is lowered, and the hard coat layer 12 may be imparted with an antistatic function. Therefore, it may be unnecessary to add an antistatic agent.

(Photopolymerization initiator)

A photopolymerization initiator is a compound that is added to initiate photopolymerization. Materials for the photopolymerization initiator are not particularly limited. For example, an $\alpha$-hydroxyacetophenon-based photopolymerization initiator may be used. Examples of the $\alpha$-hydroxyacetophenon-based photopolymerization initiator may include DAROCUR 1173, IRGACURE 184, IRGACURE 2959, and IRGACURE 127 available from BASF Japan, Ltd. ESACURE KIP 150 available from DKSH Japan may also be used. Also, these may be used alone or as a combination of two or

more selected therefrom.

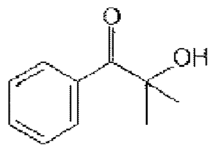

DAROCUR 1173

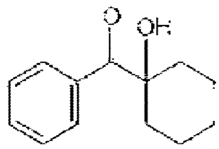

IRGACURE 184

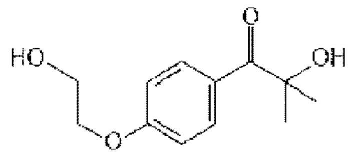

IRGACURE 2959

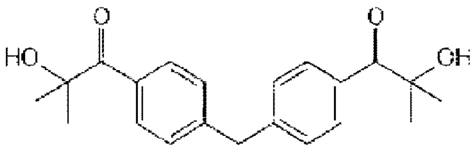

IRGACURE 127

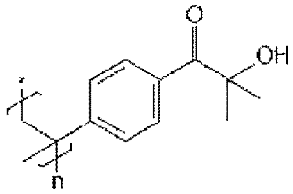

ESACURE KIP 150

An amount of the photopolymerization initiator may be in a range of about 0.5 parts to about 10 parts by weight based on 100 parts by weight of the total weight of the hard coat layer 12. When an amount of the photopolymerization initiator is less than about 0.5 parts by weight, photopolymerization may not occur. When an amount of the photopolymerization initiator is greater than about 10 parts by weight, the hard coat layer 12 may have an insufficient hard coat property. Consequently, it is hard for the hard coat layer 12 to exhibit a function that prevents the substrate 11 from being scratched.

Solvent

A solvent is not particularly limited. For example, the solvent may be at least one selected from diacetone alcohol, ethylene glycol monoethyl ether, ethylene glycol monobutyl ether, propylene glycol monomethyl ether, methyl ethyl ketone (MEK), methyl acetate, dimethyl carbonate, and 1,3-dioxolane.

However, the solvent may include a first solvent having a relatively low boiling point and a second solvent having a relatively high boiling point. In one such exemplary embodiment, the first solvent is isopropyl alcohol, and the second solvent is diacetone alcohol. In this case, a boiling point of isopropyl alcohol is 83°C, and a boiling point of diacetone alcohol is 166°C.

In this example, these two kinds of solvents are used, and a mixing ratio of each of the solvents may be adjusted. As a result, a degree of phase separation between the first component and the second component may be controlled in a drying process when forming the hard coat layer 12.

A hydrophilicity of the first component may be greater than that of the substrate 11, a hydrophilicity of the substrate 11 may be greater than that of the second component, and a hydrophilicity of the second component may be greater than that of the metal oxide particles 121. Accordingly, the first component is more likely to be unevenly distributed with a greater concentration toward the substrate 11 (the surface portion). The second component is more likely to be unevenly distributed with a greater concentration toward a side opposite the substrate 11 (the other surface portion). In addition, the metal oxide particles 121 as well as the second component are more likely to be unevenly distributed with a greater concentration toward the side opposite the substrate 11 (the other surface portion).

Further, the low refractive index layer 13 may be hydrophobic relative to the binder 122 and the metal oxide particles 121. Accordingly, when forming the low refractive index layer 13, bondability thereof to the hard coat layer 12 may improve.

Next, a method of forming the hard coat layer 12 will be described in detail.

FIG. 6 is a flowchart that illustrates an example of a method of forming the hard coat layer 12.

First, a coating solution for forming the hard coat layer 12 (a polymer film or a polymer layer) is prepared (S101: a coating solution preparation process). The coating solution includes the metal oxide particles 121, the first component and the second component that constitutes the binder 122, an antistatic agent, a photopolymerization initiator, and a solvent that disperses and/or dissolves these components.

In order to prepare the coating solution, first, the metal oxide particles 121, the first component, the second component, the antistatic agent, and the photopolymerization initiator are added to the solvent. Then, the mixture is stirred to dissolve and/or disperse the metal oxide particles 121, the first component, the second component, the antistatic agent, and the photopolymerization initiator in the solvent. The first component is mixed with the second component at

a ratio sufficient to cause phase separation. For example, when an amount of the first component is less than about 20 parts by weight, or when an amount of the second component is less than about 5 parts by weight, based on 100 parts by weight of the total weight of the hard coat layer 12, phase separation between the first component and the second component may not occur.

The coating solution preparation process may be performed by following (i), (ii), and (iii) steps in this stated order to mix the first component, the second component, the metal oxide particles 121, and a solvent, thereby preparing a coating solution.

(i) The first component is mixed with the first solvent, and the second component is mixed with the second solvent.
(ii) The metal oxide particles 121 are added to and mixed with a mixture of the second component and the second solvent.
(iii) A mixture of the first component and the first solvent is mixed with a mixture of (ii).

Accordingly, these components may be mixed relatively uniformly. The first solvent is a solvent having a relatively low boiling point, e.g., isopropyl alcohol. The second solvent is a solvent having a relatively high boiling point, e.g., diacetone alcohol.

The antistatic agent is mixed with at least one of the first component, the first solvent, and a mixture of the first component and the first solvent. The photopolymerization initiator is mixed with at least one of the second component, the second solvent, and a mixture of the second component and the second solvent.

In the coating solution, a total weight of the first component, the second component, the metal oxide particles 121, the antistatic agent, and the photopolymerization initiator may be in a range of about 1 part by weight or greater and about 80 parts by weight or less, based on 100 parts by weight of the coating solution.

Subsequently, the substrate 11 that is hydrophilic is prepared, and the coating solution prepared in S101 is coated on the substrate 11 (S102: a coating process). The coating may be performed by using, for example, a method using a wire bar.

The coated coating solution is dried (S103: a drying process). The drying process may be performed by allowing the coating solution to stand at room temperature, by heating, or by vacuum-drying. Thereby, a coating layer or coating film is formed. Here, phase separation between the first component and the second component occurs such that a proportion of the first component gradually decreases from the surface portion, i.e., the substrate 11 portion, to the other surface portion. In the drying process, the temperature and drying time may be changed to control the degree of phase separation between the first component and the second component. In particular, as the temperature increases, phase separation may occur easily. In addition, as the drying time increases, phase separation may occur easily. Accordingly, for example, phase separation as shown in FIG. 3A occurs.

Subsequently, by irradiating the coating film with light, such as UV light, photopolymerization of the first component and the second component occurs (S104: a curing process). Accordingly, the first component is photopolymerized with the second component so as to cure a coating film, thereby forming a polymer film. Thus, the hard coat layer 12 may be formed on the substrate 11. Here, since a phase of the first component has been separated from that of the second component, the structure is cured in an intact form, thereby forming a phase separation structure as shown in FIG. 3A.

## Mode for the Invention

Examples

Hereinafter, the present disclosure will be described in detail with reference to the following Examples.

First, the hard coat layer 12 according to an exemplary embodiment was prepared and evaluated.

Formation of hard coat layer 12

Example 1

In this exemplary embodiment, antimony pentoxide ($Sb_2O_5$) was used as the metal oxide particles 121. As a first component, DMAA was used. As a second component, TMMT was used. As an antistatic agent, PEDOT was used. As a photopolymerization initiator, IRGACURE 127 was used. These components were added to diacetone alcohol, i.e., a solvent, in a mixed ratio as shown in FIG. 8. Then, the mixture was stirred. That is, the metal oxide particles 121, i.e., antimony pentoxide ($Sb_2O_5$), were added in an amount of 2.2 parts by weight, based on 100 parts by weight of the total weight of the components excluding the solvent. The first component, i.e., DMAA, was added in an amount of 30 parts by weight. The second component, i.e., TMMT, was added in an amount of 64.5 parts by weight. The antistatic agent,

i.e., PEDOT, was added in an amount of 1.3 parts by weight. The photopolymerization initiator, i.e., IRGACURE127, was provided as an isopropyl alcohol solution. Accordingly, the isopropyl alcohol solution was added such that IRGACURE127 in a solid state was 2.0 parts by weight. The solvent, i.e., diacetone alcohol, was added such that an amount of the components excluding the solvent was 30 wt%. Thereby, a coating solution was prepared.

Subsequently, the substrate 11 formed of TAC was prepared, and the coating solution was coated on the substrate 11 by using a wire bar. The coated coating solution was allowed to stand at room temperature for 1 minute, and then was heated and dried at a temperature of 100 for 1 minute to thereby form a coating film. The coating film was then subjected to irradiation from a UV lamp (a metal halide lamp, a light quantity of 1,000 milliJoules per square centimeter (mJ/cm$^2$)) for 5 seconds. Thereby, the coating film was cured. By following a sequence of these procedures, the hard coat layer 12 was prepared on the substrate 11. Also, in order to perform evaluation of the hard coat layer 12, a low refractive layer 13 was not prepared.

Examples 2 to 10

As shown in FIG. 8, the type of the first component was changed. Other than these changes, the hard coat layer 12 was prepared in substantially the same manner as in Example 1.

Comparative Example 1

The first component was changed to dimethyl aminoethyl acrylate (DMAEA). Other than these changes, the hard coat layer 12 was prepared in substantially the same manner as in Example 1. DMAEA is a monomer that does not contain an acrylamide skeleton.

Comparative Examples 2 to 4, Examples 11 to 15, Comparative Example 5

The first component was changed to NMMA. As shown in FIG. 9, the amount of the first component was changed. The amount of the second component, i.e., TMMT, was also changed as shown in FIG. 9. Other than these changes, the hard coat layer 12 was prepared in substantially the same manner as in Example 1. In Comparative Example 2, the first component was not added. In Comparative Example 5, the second component was not added.

Examples 16 to 19 and Comparative Examples 6 and 7

The first component was changed to NMMA. As shown in FIG. 10, the amount of the second component was changed. Other than these changes, the hard coat layer 12 was prepared in substantially the same manner as in Example 1. The 35 mol ethoxylated TMMT used in Comparative Example 6 is a hydrophilic monomer, not a hydrophobic monomer. The 20 mol ethoxylated-glycerin triacrylate used in Comparative Example 7 is a hydrophilic monomer, not a hydrophobic monomer.

Examples 20 to 23

The first component was changed to NMMA. The metal oxide particles 121 were changed as shown in FIG. 11. Other than these changes, the hard coat layer 12 was prepared in substantially the same manner as in Example 1.

Evaluation method

The phase separation, refractive index of a surface layer, a surface resistance value, and thickness of a film of the hard coat layer 12 were evaluated. Hereinafter, an evaluation method will be described.

Phase separation

A reflectance spectrum was measured to verify whether the hard coat layer 12 is in a phase separation state.

A method of measuring the reflectance spectrum is as follows: a sample is prepared, in which a back side of the substrate 11, i.e., a TAC film, is printed in black. The reason for printing in black is to stop light from being reflected by the back side of the substrate 11, in order to allow accurate evaluation to be performed. As for a measuring device, a spectrophotometer or spectrocolorimeter may be used to measure the reflectance. Here, CM-2600d available from Konica Minolta Co., Ltd. was used as a spectrocolorimeter for measurement.

FIG. 7 is a graph showing a reflectance spectrum. In FIG. 7, the x-axis represents wavelength, and the y-axis represents reflectance.

In the case of a general monolayer of the hard coat layer 12 coated on a TAC film, a reflectance spectrum have a linear form, as shown by the bold line in FIG. 7. Since an interface of the TAC film is dissolved in a solvent, interfacial reflection may be ignored. This reason for this is that, since the hard coat layer 12 is a monolayer, interference with light reflected at another interface does not occur. In this regard, the hard coat layer 12 having a reflectance spectrum indicated by a dotted line is found to have light interference. This fact implies existence of another interface. Thus, the reflectance spectrum thereof does not have a linear form, and thus is found to have a lowest (or a greatest) value of the reflectance. This fact implies existence of another interface within the hard coat layer 12 having another layer with a different refractive index. In other words, when the spectrum has a linear form as shown by the bold line in FIG. 7, the hard coat layer 12 is a monolayer and is not in a phase separation state. When the spectrum has the form of a dotted line as in FIG. 7, the hard coat layer 12 includes multiple layers, and is in a phase separation state.

Refractive index of a surface layer

The refractive index of a surface layer and the refractive index of an internal layer may be calculated from the reflectance spectrum of the hard coat layer 12. A simple calculation method is: the lowest value in the reflectance spectrum=a reflectance corresponding to a refractive index of an internal layer, and the greatest value in the reflectance spectrum= a reflectance corresponding to a refractive index of a surface layer.
In general, when a ray from a material having a refractive index n, is vertically incident on a material having a refractive index $n_2$, a surface reflectance ($R_{ref}$) may be calculated as in the following equation.

$$R_{ref} = \left[ \frac{n_1 - n_2}{n_1 + n_2} \right]^2$$

When a refractive index of a surface layer is relatively great, the low refractive index layer 13 may have relatively great effects of suppressing reflection.

Surface resistance value

The surface resistance value was measured by using UX MCP-HT800 manufactured by Mitsubishi Chemical Analytech Co., Ltd. This measurement was made under the measuring conditions including a temperature of 24°C and a relative humidity of 50%.
The lower surface resistance value indicates that the hard coat layer 12 is hard to be charged.

Layer thickness

A layer thickness was measured by using spectroscopic ellipsometer SMART SE available from Horiba Co., Ltd.

Evaluation result

The evaluation results are shown in FIGS. 8 to 11. In FIGS. 8 to 11, "O" represents the occurrence of phase separation, and "×" represents non-occurrence of phase separation.

Examples 1 to 10 can be compared with Comparative Example 1.

In each of Examples 1 to 10, phase separation occurred, and the hard coat layer 12 as shown in FIG. 3 was formed. The refractive index of a surface layer and the surface resistance value were also satisfactory. In contrast, in Comparative Example 1, phase separation did not occur, and the hard coat layer 12 as shown in FIG. 3 was not formed. In addition, the refractive index of a surface layer and the surface resistance value of Comparative Example 1 were not good, as compared with Examples 1 to 10. It is deemed that the use of DMAEA, which is a monomer not containing an acrylamide skeleton, was the reason for the non-occurrence of phase separation in Comparative Example 1.

Next, Examples 11 to 15 can be compared with Comparative Examples 2 to 5.

In each of Examples 11 to 15, phase separation occurred, and the hard coat layer 12 as shown in FIG. 3 was formed. The refractive index of a surface layer and the surface resistance value were also satisfactory. In contrast, in each of Comparative Examples 2 to 5, phase separation did not occur, and the hard coat layer 12 as shown in FIG. 3 was not formed. In addition, the refractive index of a surface layer and the surface resistance value of Comparative Examples 2 to 5 were not good, as compared with Examples 11 to 15. It is deemed that the absence of the first component was the reason for the non-occurrence of phase separation in Comparative Example 2. It is deemed that the inappropriate ratio between the first component and the second component was the reason for the non-occurrence of phase separation in Comparative Examples 3 and 4. That is, the first component was not mixed with the second component in a ratio that allows phase separation. It is deemed that the absence of the second component was the reason for the non-occurrence of phase separation in Comparative Example 5.

Examples 16 to 19 can be compared with Comparative Examples 6 and 7.

In each of Examples 16 to 19, phase separation occurred, and the hard coat layer 12 as shown in FIG. 3 was formed. The refractive index of a surface layer and the surface resistance value were also satisfactory. In contrast, in each of Comparative Examples 6 and 7, phase separation did not occur, and the hard coat layer 12 as shown in FIG. 3 was not formed. The surface resistance value was satisfactory; however, the refractive index of a surface layer was poor, as compared with Examples 16 to 19. It is deemed that the use of the second component, which is hydrophilic (not hydrophobic), was the reason for the non-occurrence of phase separation in Comparative Examples 6 and 7. That is, the 35 mol ethoxylated TMMT in Comparative Example 6 has a solubility with respect to water of 50 wt% or greater. In addition, the 20 mol ethoxylated glycerin triacrylate in Comparative Example 7 has a solubility with respect to water of 30 wt% or greater. That is, ethoxylated TMMT and ethoxylated glycerin triacrylate are both hydrophilic.

In each of Examples 20 to 23, phase separation occurred in spite of the change of the metal oxide particles 121, and the hard coat layer 12 as shown in FIG. 3 was formed. The surface resistance value and the refractive index of a surface layer were satisfactory.

As described above, when phase separation does not occur, as was the case in Comparative Examples 1 to 7, the metal oxide particles 121 may not be localized. In addition, the surface resistance value and the refractive index of a surface layer may deteriorate.

As described above in detail, the metal oxide particles 121 may be localized in the hard coat layer 12 (a polymer film or a polymer layer) to a great degree. In addition, the hard coat layer 12 may be formed by performing the coating process once. Therefore, the productivity of forming the hard coat layer 12 is improved, as compared with the productivity of forming a conventional multi-layered hard coat layer formed by applying each layer. In addition, the production cost may decrease, and the yield may improve as well.

Although the display device 1 in the embodiments described herein may include a hard coat layer 12 and a low refractive layer 13 formed on a liquid crystal panel E, exemplary embodiments are not limited thereto. For example, the hard coat layer 12 (and a low refractive layer 13) may be formed on an organic light-emitting diode (OLED) device or a Braun tube display.

Also, although exemplary embodiments herein described a low refractive layer 13 equipped therein, a low refractive layer 13 does not need to be equipped when not necessary. For example but not according to the invention, metal oxide particles of the hard coat layer 12 may be replaced with hollow silica particles. In this case, the hollow silica particles may be unevenly distributed with a greater concentration toward the other surface portion (the upper side) in FIG. 3A. In this case, the other surface portion (the upper side) in FIG. 3A of the hard coat layer 12, in which the hollow silica particles are localized, may have a lower refractive index than the other surface portion (the lower side) in FIG. 3A. Accordingly, the hard coat layer 12 may also serve as the low refractive index layer 13.

As apparent from the foregoing description, a display device may be obtained, which employs a polymer film in which metal oxide particles are localized to a great degree.

It should be understood that exemplary embodiments described herein should be considered in a descriptive sense only and not for purposes of limitation.

While one or more exemplary embodiments have been described with reference to the figures, it will be understood that various changes in form and details may be made therein without departing from the scope as defined by the following claims.

## Industrial Applicability

According to exemplary embodiments consistent with the present disclosure, a display device employing a polymer film in which metal oxide particles are localized to a great degree can be obtained.

## Claims

**1.** A display device comprising:

a display (1a) that displays an image; and
a polymer film (12) disposed on the display,
wherein the polymer film comprises a binder (122) and metal oxide particles (121),
the binder comprises a first polymer component (122a) and a second polymer component (122b),
the first polymer component (122a) and the second polymer component (122b) are miscible with each other,
the metal oxide particles (121) are unevenly distributed in a thickness direction of the polymer film with a relatively greater concentration of the metal oxide particles being located toward at least one of a surface portion of the polymer film and an other surface portion of the polymer film that is opposite the surface portion in the thickness direction,
the first polymer component (122a) is hydrophilic,
the second polymer component (122b) is hydrophobic relative to the first polymer component,
a proportion of the first polymer component (122a) gradually decreases from the surface portion to the other surface portion, and
the surface portion is a portion of the polymer film located closest to the display, and
wherein the metal oxide particles are unevenly distributed with a greater concentration toward the other surface portion,
wherein the binder is a product of photopolymerization of:

a first component that constitutes the first polymer component and is at least one of a monomer and an oligomer, wherein the monomer and the oligomer each comprise at least one photopolymerizable functional group in one molecule; and
a second component that constitutes the second polymer component and is a monomer comprising at least two photopolymerizable functional groups in one molecule,
wherein an amount of the first component is in a range of 20 parts by weight to 90 parts by weight based on 100 parts by weight of a total weight of the polymer film, an amount of the second component is in a range of about 5 parts to about 90 parts by weight based on 100 parts by weight of the total weight of the polymer film, and an amount of the metal oxide particles is in a range of about 0.1 parts to about 10 parts by weight based on 100 parts by weight of the total weight of the polymer film, the display device being **characterised in that** the monomer and the oligomer of the first polymer component each comprise an acrylamide skeleton.

**2.** The display device of claim 1, further comprising a low refractive index layer having a refractive index smaller than that of the polymer film, wherein the low refractive index layer is disposed on the other surface portion of the polymer film, and
the low refractive index layer is hydrophobic relative to the binder and the metal oxide particles.

**3.** The display device of claim 2, further comprising an antistatic agent and a polymerization initiator, which are mainly distributed in the polymer film toward the other surface portion.

**4.** The display device of claim 2 or 3, wherein a hydrophilicity of the first component is greater than that of the display, a hydrophilicity of the display is greater than that of the second component, and a hydrophilicity of the second component is greater than that of the metal oxide particles.

**5.** The display device of claim 1, wherein the display device further comprises a substrate disposed between the display and the polymer film, wherein the polymer film is disposed on the substrate, and wherein the substrate comprises a polarization layer arranged to polarize light.

## Patentansprüche

**1.** Anzeigevorrichtung, umfassend:

eine Anzeige (1a), die ein Bild anzeigt; und
einen Polymerfilm (12), der auf der Anzeige vorgesehen ist,

wobei der Polymerfilm ein Bindemittel (122) und Metalloxidpartikel (121) umfasst,
das Bindemittel eine erste Polymerkomponente (122a) und eine zweite Polymerkomponente (122b) umfasst,
die erste Polymerkomponente (122a) und die zweite Polymerkomponente (122b) miteinander mischbar sind,
die Metalloxidpartikel (121) in einer Dickenrichtung des Polymerfilms ungleichmäßig verteilt sind, wobei sich eine relativ größere Konzentration der Metalloxidpartikel in Richtung mindestens eines von einem Oberflächenabschnitt des Polymerfilms und einem anderen Oberflächenabschnitt des Polymerfilms, der dem Oberflächenabschnitt in der Dickenrichtung gegenüberliegt, befindet,
die erste Polymerkomponente (122a) hydrophil ist,
die zweite Polymerkomponente (122b) relativ zu der ersten Polymerkomponente hydrophob ist,
eine Proportion der ersten Polymerkomponente (122a) von dem Oberflächenabschnitt zu dem anderen Oberflächenabschnitt allmählich abnimmt und
der Oberflächenabschnitt ein Abschnitt des Polymerfilms ist, der sich der Anzeige am nächsten befindet, und
wobei die Metalloxidpartikel ungleichmäßig verteilt sind, wobei eine größere Konzentration in Richtung des anderen Oberflächenabschnitts vorliegt,
wobei das Bindemittel ein Produkt der Photopolymerisation von Folgendem ist:

einer ersten Komponente, die die erste Polymerkomponente darstellt und mindestens eines von einem Monomer und einem Oligomer ist, wobei das Monomer und das Oligomer jeweils mindestens eine photopolymerisierbare funktionelle Gruppe in einem Molekül umfassen; und
einer zweiten Komponente, die die zweite Polymerkomponente darstellt und ein Monomer ist, das mindestens zwei photopolymerisierbare funktionelle Gruppen in einem Molekül umfasst,
wobei eine Menge der ersten Komponente in einem Bereich von 20 Gewichtsteilen bis 90 Gewichtsteilen basierend auf 100 Gewichtsteilen eines Gesamtgewichts des Polymerfilms liegt, eine Menge der zweiten Komponente in einem Bereich von etwa 5 Gewichtsteilen bis etwa 90 Gewichtsteilen basierend auf 100 Gewichtsteilen des Gesamtgewichts des Polymerfilms liegt und eine Menge der Metalloxidpartikel in einem Bereich von etwa 0,1 Gewichtsteilen bis etwa 10 Gewichtsteilen basierend auf 100 Gewichtsteilen des Gesamtgewichts des Polymerfilms liegt, wobei die Anzeigevorrichtung **dadurch gekennzeichnet ist, dass** das Monomer und das Oligomer der ersten Polymerkomponente jeweils ein Acrylamid-Gerüst umfassen.

2. Anzeigevorrichtung nach Anspruch 1, die ferner eine Schicht mit niedrigem Brechungsindex umfasst, die einen Brechungsindex aufweist, der kleiner ist als der des Polymerfilms, wobei die Schicht mit niedrigem Brechungsindex auf dem anderen Oberflächenabschnitt des Polymerfilms vorgesehen ist und
die Schicht mit niedrigem Brechungsindex relativ zu dem Bindemittel und den Metalloxidpartikeln hydrophob ist.

3. Anzeigevorrichtung nach Anspruch 2, die ferner ein Antistatikmittel und einen Polymerisationsinitiator umfasst, die in dem Polymerfilm hauptsächlich in Richtung des anderen Oberflächenabschnitts verteilt sind.

4. Anzeigevorrichtung nach Anspruch 2 oder 3, wobei eine Hydrophilie der ersten Komponente größer ist als die der Anzeige, eine Hydrophilie der Anzeige größer ist als die der zweiten Komponente und eine Hydrophilie der zweiten Komponente größer ist als die der Metalloxidpartikel.

5. Anzeigevorrichtung nach Anspruch 1, wobei die Anzeigevorrichtung ferner ein Substrat umfasst, das zwischen der Anzeige und dem Polymerfilm vorgesehen ist, wobei der Polymerfilm auf dem Substrat vorgesehen ist und wobei das Substrat eine Polarisationsschicht umfasst, die zum Polarisieren von Licht angeordnet ist.

**Revendications**

1. Dispositif d'affichage comprenant :

un affichage (1a) qui affiche une image ; et
un film polymère (12) disposé sur l'affichage,
dans lequel le film polymère comprend un liant (122) et des particules d'oxyde métallique (121), le liant comprend un premier composant polymère (122a) et un second composant polymère (122b),
le premier composant polymère (122a) et le second composant polymère (122b) sont miscibles l'un avec l'autre,
les particules d'oxyde métallique (121) sont réparties non uniformément dans le sens de l'épaisseur du film polymère avec une concentration relativement plus forte des particules d'oxyde métallique se situant vers au moins l'une d'une partie de surface du film polymère et d'une autre partie de surface du film polymère qui est

opposée à la partie de surface dans le sens de l'épaisseur,
le premier composant polymère (122a) est hydrophile,
le second composant polymère (122b) est hydrophobe par rapport au premier composant polymère,
une proportion du premier composant polymère (122a) diminue progressivement de la partie de surface à l'autre partie de surface, et
la partie de surface est une partie du film polymère située la plus proche de l'affichage, et
dans lequel les particules d'oxyde métallique sont réparties non uniformément avec une concentration plus forte vers l'autre partie de surface,
dans lequel le liant est un produit de photopolymérisation de :

un premier composant qui constitue le premier composant polymère et est au moins l'un d'un monomère et un oligomère, dans lequel le monomère et l'oligomère comprennent chacun au moins un groupe fonctionnel photopolymérisable dans une molécule ; et
un second composant qui constitue le second composant polymère et est un monomère comprenant au moins deux groupes fonctionnels photopolymérisables dans une molécule,
dans lequel une quantité du premier composant est comprise dans une plage de 20 parts en poids à 90 parts en poids sur la base de 100 parts en poids du poids total du film polymère, une quantité du second composant est comprise dans une plage d'environ 5 parts à environ 90 parts en poids sur la base de 100 parts en poids du poids total du film polymère, et une quantité des particules d'oxyde métallique est comprise dans une plage d'environ 0,1 part à environ 10 parts en poids sur la base de 100 parts en poids du poids total du film polymère, le dispositif d'affichage étant **caractérisé en ce que** le monomère et l'oligomère du premier composant polymère comprennent chacun un squelette acrylamide.

**2.** Dispositif d'affichage selon la revendication 1, comprenant en outre une couche à faible indice de réfraction ayant un indice de réfraction inférieur à celui du film polymère, dans lequel la couche à faible indice de réfraction est disposée sur l'autre partie de surface du film polymère, et la couche à faible indice de réfraction est hydrophobe par rapport au liant et aux particules d'oxyde métallique.

**3.** Dispositif d'affichage selon la revendication 2, comprenant en outre un agent antistatique et un initiateur de polymérisation, qui sont principalement répartis dans le film polymère vers l'autre partie de surface.

**4.** Dispositif d'affichage selon la revendication 2 ou 3, dans lequel l'hydrophilie du premier composant est supérieure à celle de l'affichage, l'hydrophilie de l'affichage est supérieure à celle du second composant, et l'hydrophilie du second composant est supérieure à celle des particules d'oxyde métallique.

**5.** Dispositif d'affichage selon la revendication 1, dans lequel le dispositif d'affichage comprend en outre un substrat disposé entre l'affichage et le film polymère, dans lequel le film polymère est disposé sur le substrat, et dans lequel le substrat comprend une couche de polarisation agencée pour polariser la lumière.

[Fig. 1A]

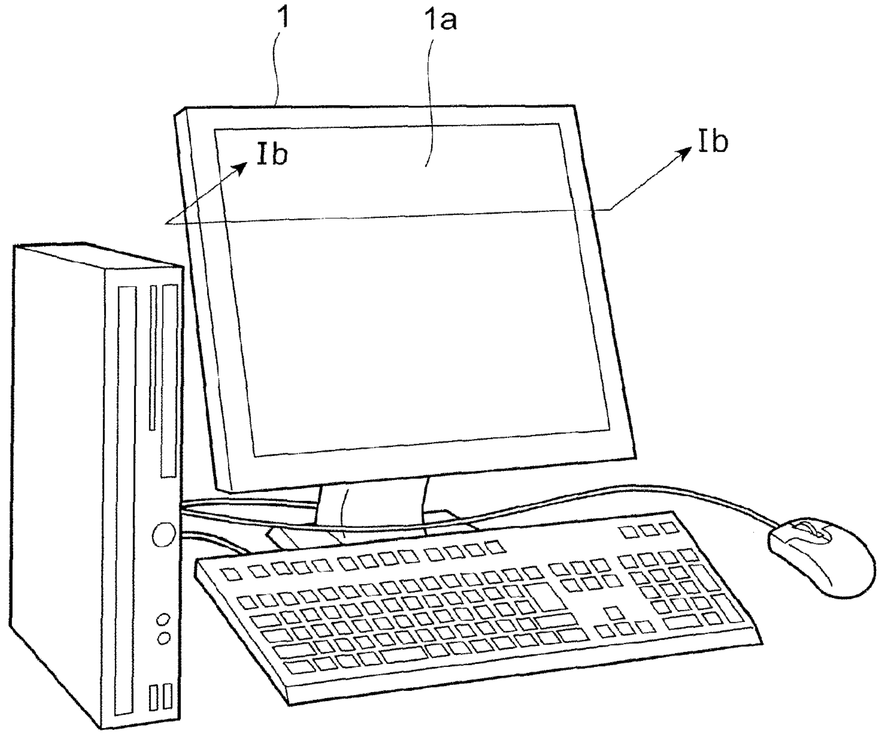


[Fig. 1B]

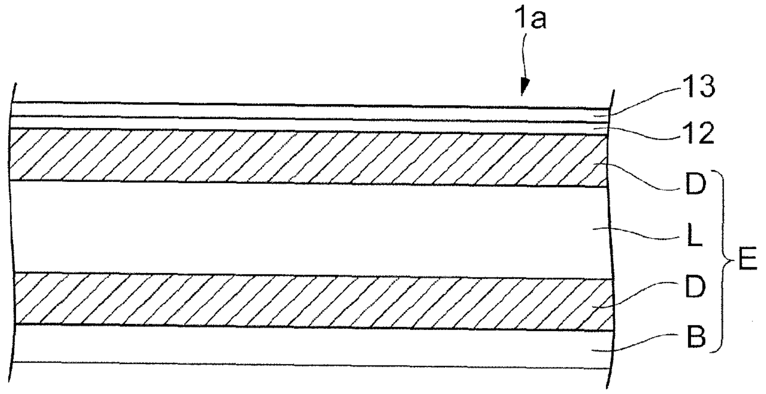


[Fig. 1C]

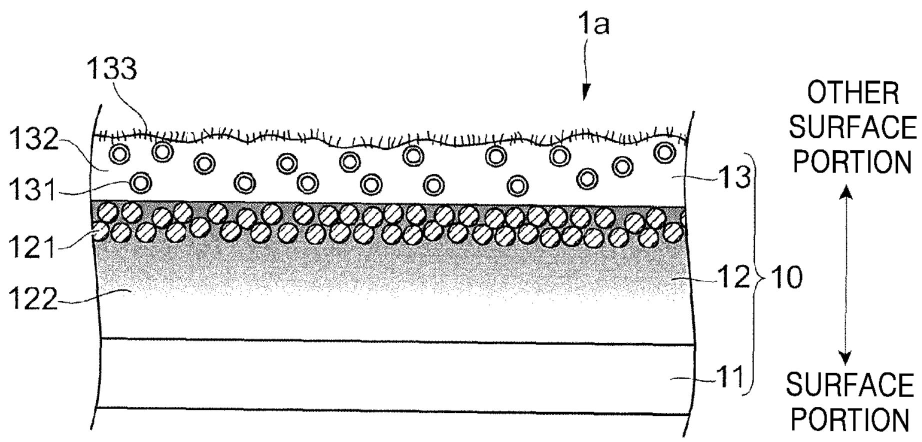

[Fig. 2]

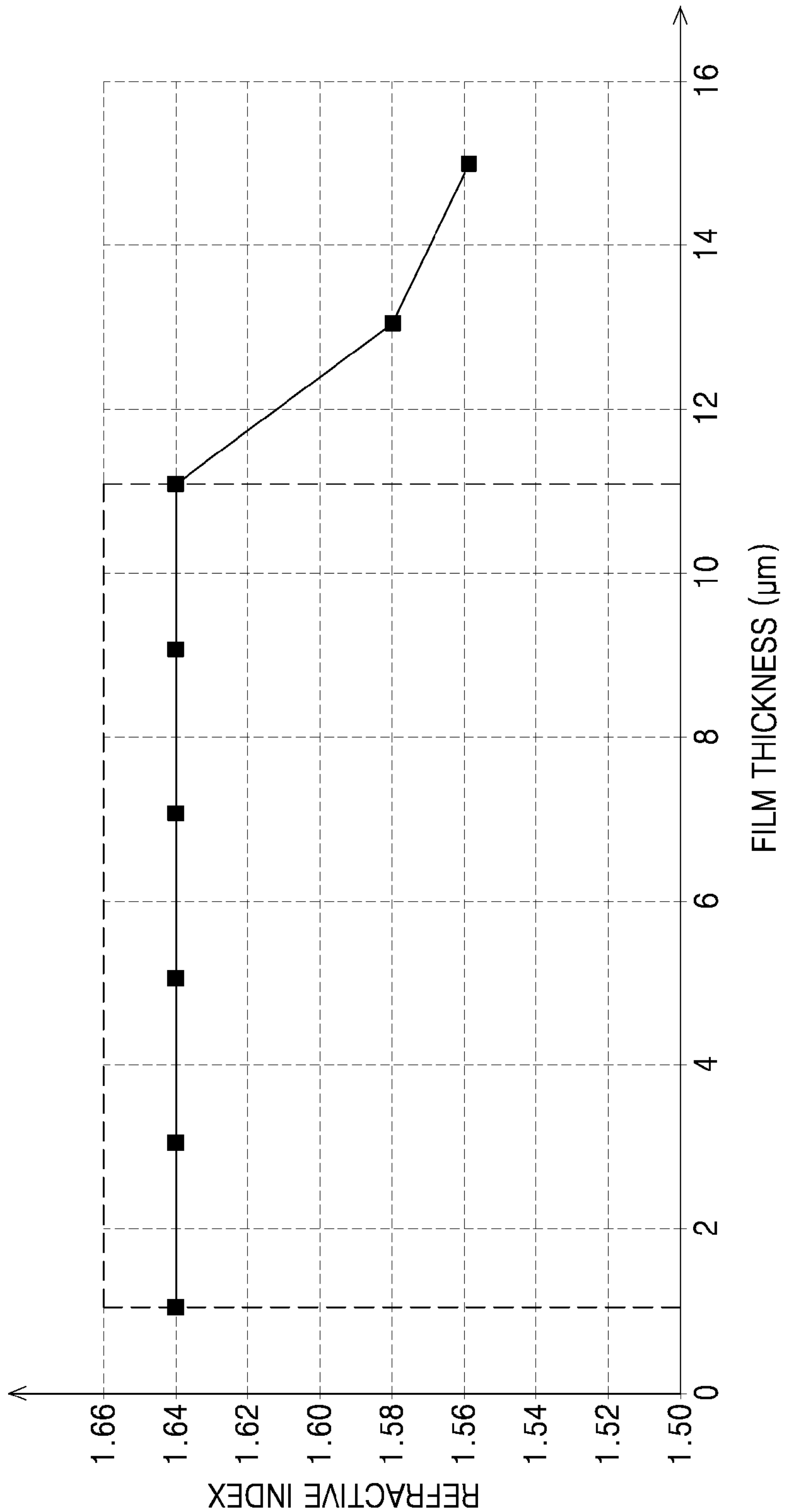
REFRACTIVE INDEX
1.66
1.64
1.62
1.60
1.58
1.56
1.54
1.52
1.50
0
2
4
6
8
10
12
14
16
FILM THICKNESS (μm)

[Fig. 3A]

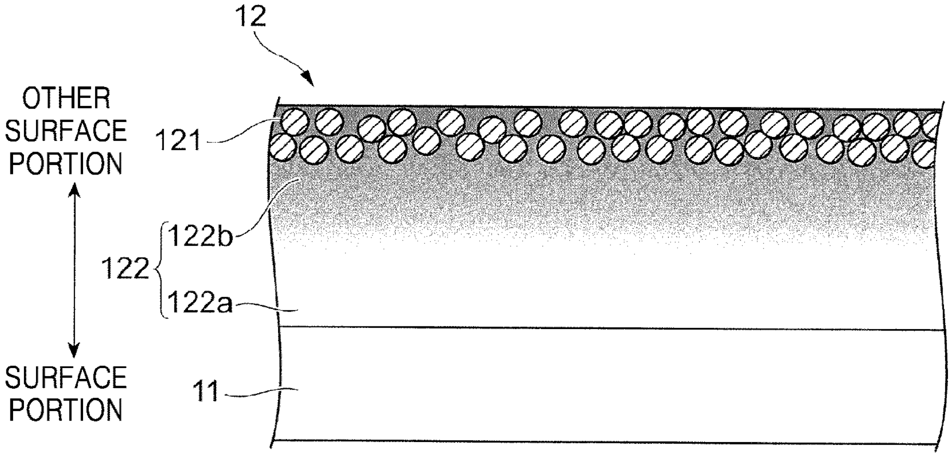


[Fig. 3B]

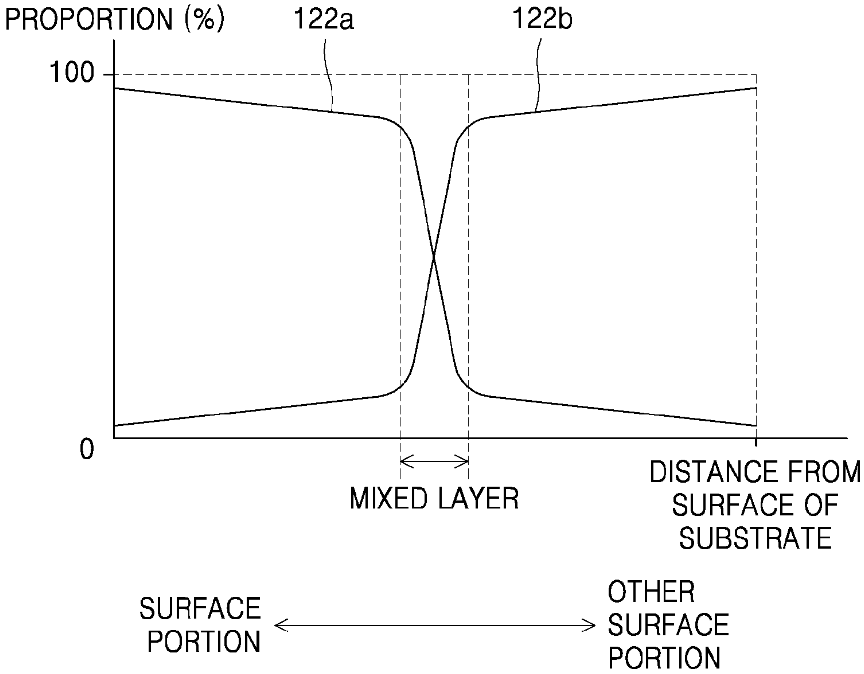


[Fig. 4]

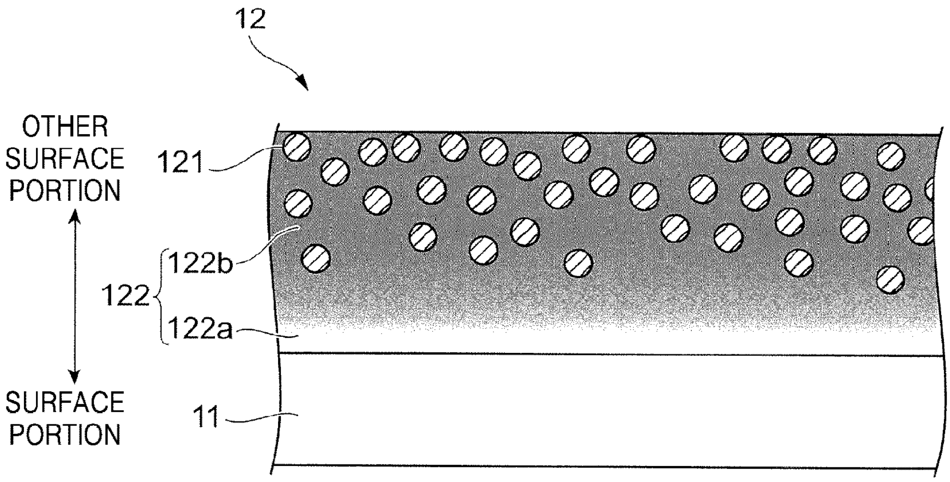

[Fig. 5]

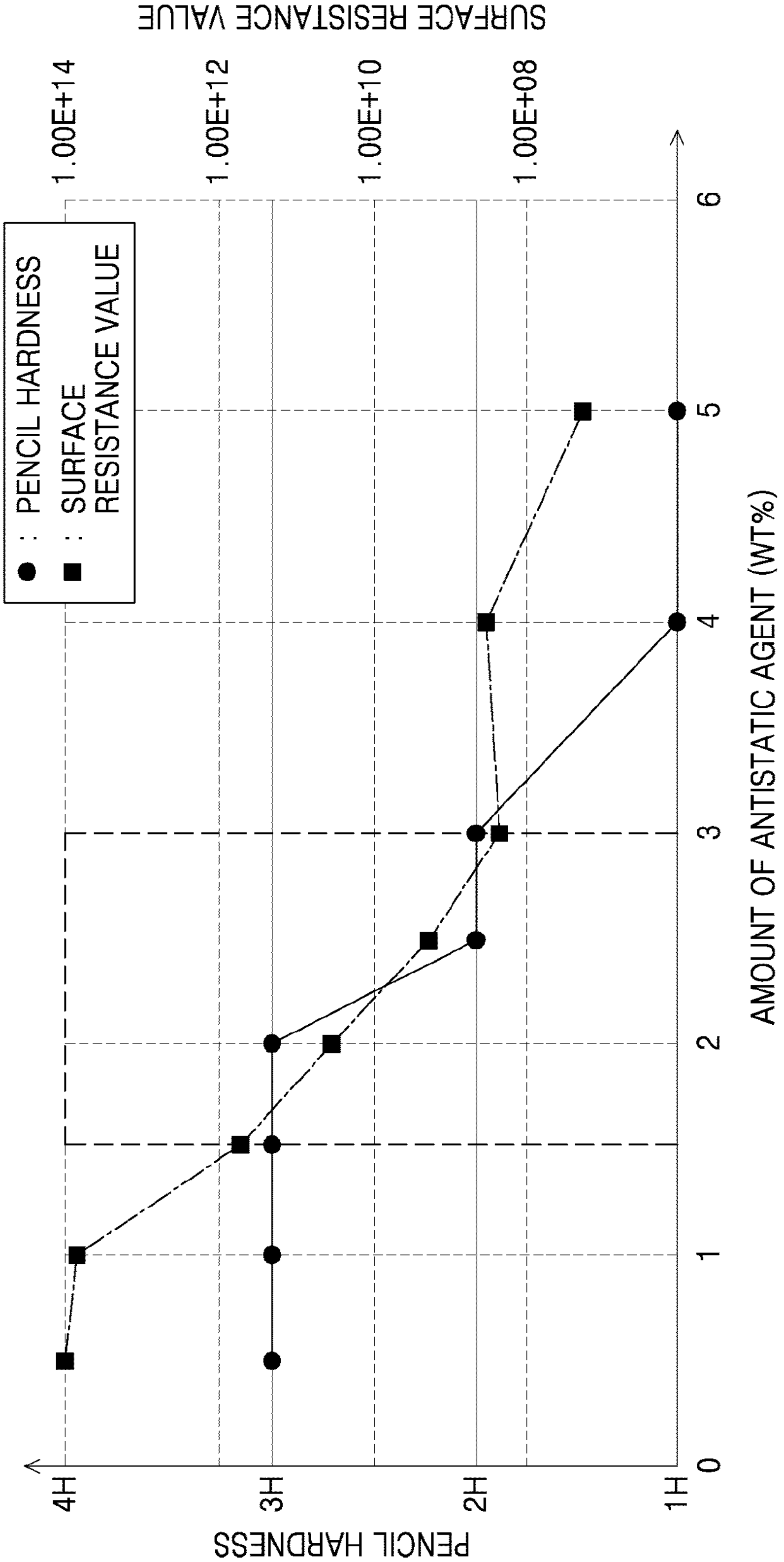
SURFACE RESISTANCE VALUE
1.00E+14
1.00E+12
1.00E+10
1.00E+08
● : PENCIL HARDNESS
■ : SURFACE RESISTANCE VALUE
PENCIL HARDNESS
4H
3H
2H
1H
0
1
2
3
4
5
6
AMOUNT OF ANTISTATIC AGENT (WT%)

[Fig. 6]

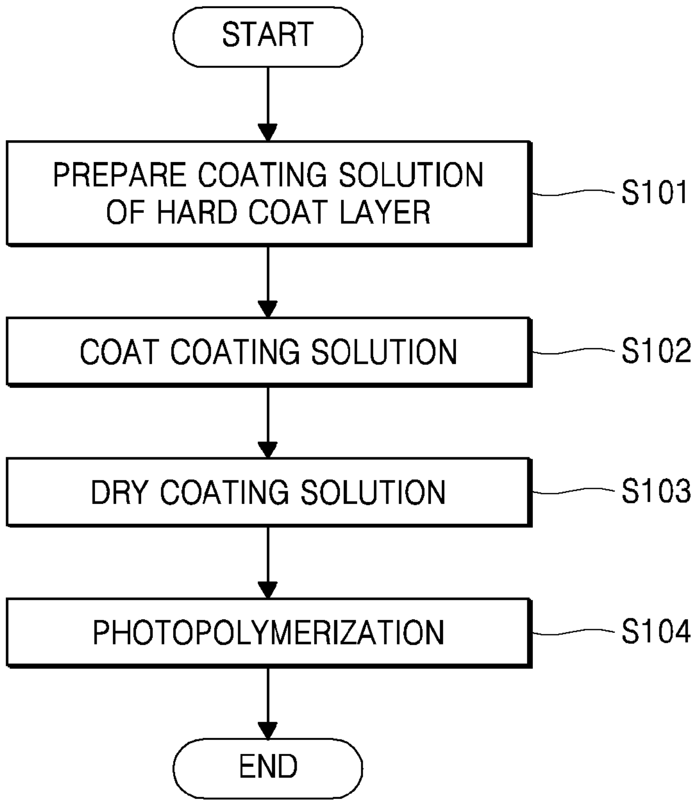
START
PREPARE COATING SOLUTION OF HARD COAT LAYER
S101
COAT COATING SOLUTION
S102
DRY COATING SOLUTION
S103
PHOTOPOLYMERIZATION
S104
END

[Fig. 7]

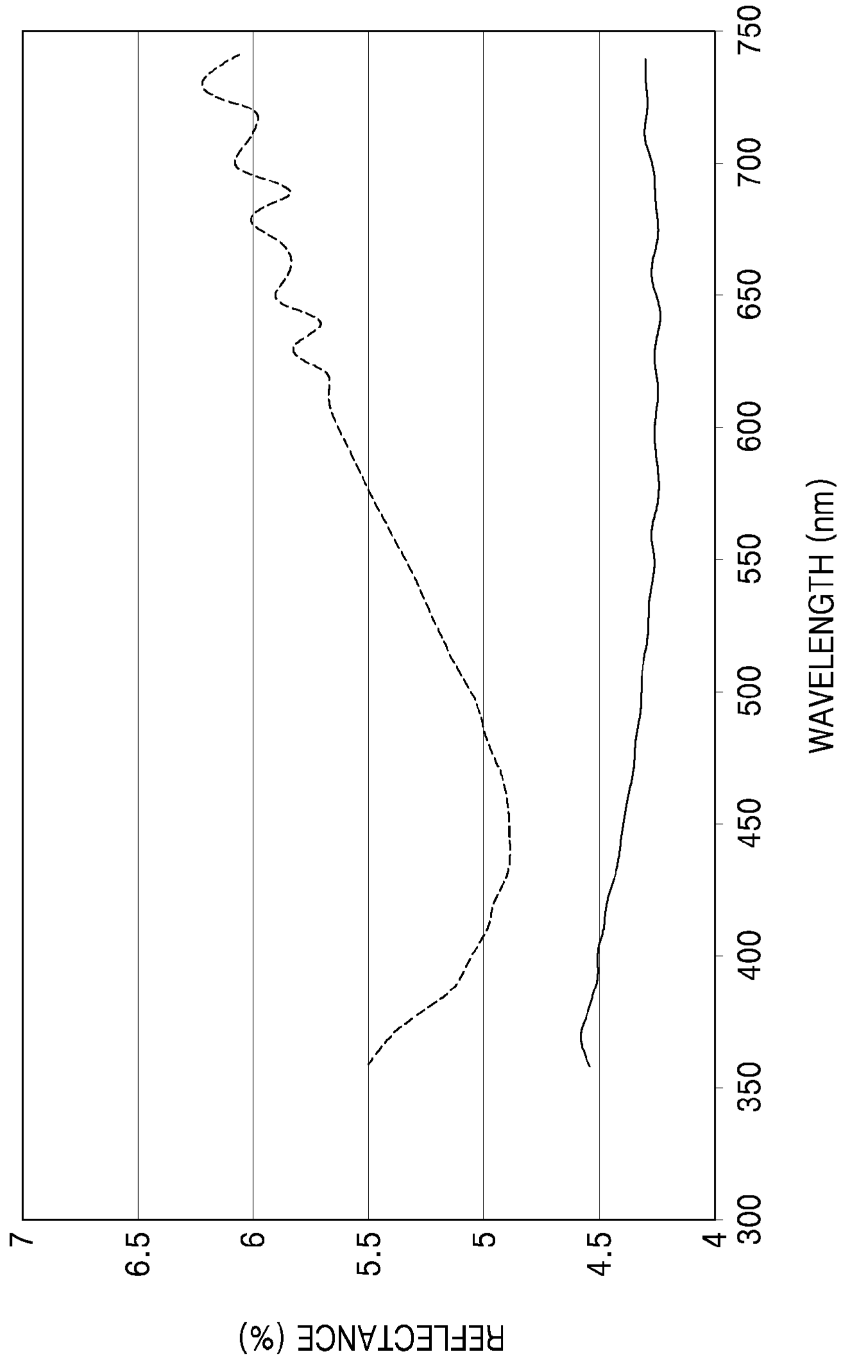
REFLECTANCE (%)
7
6.5
6
5.5
5
4.5
4
WAVELENGTH (nm)
300
350
400
450
500
550
600
650
700
750

[Fig. 8]

| | COMPONENT | | | | | EVALUATION RESULTS | | | |
|---|---|---|---|---|---|---|---|---|---|
| | METAL OXIDE PARTICLES | BINDER | | ANTISTATIC AGENT (PEDOT) | PHOTOPOLY-MERIZATION INITIATOR (IRGACURE127) | PHASE SEPARATION | REFRACTIVE INDEX ON SURFACE LAYER | SURFACE RESISTANCE VALUE | FILM THICKNESS |
| | (TYPE, ADDED AMOUNT (wt%)) | FIRST COMPONEN (TYPE, ADDED AMOUNT (wt%)) | SECOND COMPONENT (TYPE, ADDED AMOUNT (wt%)) | (wt%) | (wt%) | | | (Ω/□) | (μm) |
| EXAMPLE 1 | $Sb_2O_5$ 2.2 | DMAA 30 | TMMT 64.5 | 1.3 | 2.0 | ○ | 1.64 | 8.00E+09 | 5.5 |
| EXAMPLE 2 | $Sb_2O_5$ 2.2 | DEAA 30 | TMMT 64.5 | 1.3 | 2.0 | ○ | 1.64 | 7.50E+09 | 5.5 |
| EXAMPLE 3 | $Sb_2O_5$ 2.2 | NMMA 30 | TMMT 64.5 | 1.3 | 2.0 | ○ | 1.64 | 7.80E+09 | 5.5 |
| EXAMPLE 4 | $Sb_2O_5$ 2.2 | NBMA 30 | TMMT 64.5 | 1.3 | 2.0 | ○ | 1.64 | 7.10E+09 | 5.5 |
| EXAMPLE 5 | $Sb_2O_5$ 2.2 | IBMA 30 | TMMT 64.5 | 1.3 | 2.0 | ○ | 1.64 | 4.50E+09 | 5.5 |
| EXAMPLE 6 | $Sb_2O_5$ 2.2 | HEAA 30 | TMMT 64.5 | 1.3 | 2.0 | ○ | 1.64 | 3.10E+09 | 5.5 |
| EXAMPLE 7 | $Sb_2O_5$ 2.2 | ACMO 30 | TMMT 64.5 | 1.3 | 2.0 | ○ | 1.64 | 8.90E+09 | 5.5 |
| EXAMPLE 8 | $Sb_2O_5$ 2.2 | DAAM 30 | TMMT 64.5 | 1.3 | 2.0 | ○ | 1.64 | 4.40E+09 | 5.5 |
| EXAMPLE 9 | $Sb_2O_5$ 2.2 | TBAA 30 | TMMT 64.5 | 1.3 | 2.0 | ○ | 1.64 | 6.90E+09 | 5.5 |
| EXAMPLE 10 | $Sb_2O_5$ 2.2 | MBAA 30 | TMMT 64.5 | 1.3 | 2.0 | ○ | 1.64 | 8.30E+09 | 5.5 |
| COMPARATIVE EXAMPLE 1 | $Sb_2O_5$ 2.2 | DMAEA 30 | TMMT 64.5 | 1.3 | 2.0 | X | 1.54 | 8.00E+09 | 5.5 |

[Fig. 9]

| | COMPONENT | | | | | EVALUATION RESULTS | | | |
|---|---|---|---|---|---|---|---|---|---|
| | METAL OXIDE PARTICLES (TYPE, ADDED AMOUNT (wt%)) | BINDER | | ANTISTATIC AGENT (PEDOT) (wt%) | PHOTOPOLYMERIZATION INITIATOR (IRGACURE127) (wt%) | PHASE SEPARATION | REFRACTIVE INDEX ON SURFACE LAYER | SURFACE RESISTANCE VALUE (Ω/□) | FILM THICKNESS (μm) |
| | | FIRST COMPONEN (TYPE, ADDED AMOUNT (wt%)) | SECOND COMPONENT (TYPE, ADDED AMOUNT (wt%)) | | | | | | |
| COMPARATIVE EXAMPLE 2 | $Sb_2O_5$ 2.2 | - | TMMT 94.5 | 1.3 | 2.0 | X | 1.54 | 6.80E+09 | 5.5 |
| COMPARATIVE EXAMPLE 3 | $Sb_2O_5$ 2.2 | NMMA 10 | TMMT 84.5 | 1.3 | 2.0 | X | 1.54 | 5.50E+09 | 5.5 |
| COMPARATIVE EXAMPLE 4 | $Sb_2O_5$ 2.2 | NMMA 15 | TMMT 79.5 | 1.3 | 2.0 | X | 1.54 | 4.90E+09 | 5.5 |
| EXAMPLE 11 | $Sb_2O_5$ 2.2 | NMMA 20 | TMMT 74.5 | 1.3 | 2.0 | ○ | 1.60 | 7.80E+09 | 5.5 |
| EXAMPLE 12 | $Sb_2O_5$ 2.2 | NMMA 40 | TMMT 54.5 | 1.3 | 2.0 | ○ | 1.64 | 7.80E+09 | 5.5 |
| EXAMPLE 13 | $Sb_2O_5$ 2.2 | NMMA 50 | TMMT 44.5 | 1.3 | 2.0 | ○ | 1.64 | 7.80E+09 | 5.5 |
| EXAMPLE 14 | $Sb_2O_5$ 2.2 | NMMA 80 | TMMT 14.5 | 1.3 | 2.0 | ○ | 1.64 | 7.80E+09 | 5.5 |
| EXAMPLE 15 | $Sb_2O_5$ 2.2 | NMMA 90 | TMMT 4.5 | 1.3 | 2.0 | ○ | 1.64 | 7.80E+09 | 5.5 |
| COMPARATIVE EXAMPLE 5 | $Sb_2O_5$ 2.2 | NMMA 94.5 | - | 1.3 | 2.0 | X | 1.52 | 1.70E+09 | 5.5 |

[Fig. 10]

| | COMPONENT | | | | | EVALUATION RESULTS | | | |
|---|---|---|---|---|---|---|---|---|---|
| | METAL OXIDE PARTICLES (TYPE, ADDED AMOUNT (wt%)) | BINDER: FIRST COMPONEN (TYPE, ADDED AMOUNT (wt%)) | BINDER: SECOND COMPONENT (TYPE, ADDED AMOUNT (wt%)) | ANTISTATIC AGENT (PEDOT) (wt%) | PHOTOPOLY-MERIZATION INITIATOR (IRGACURE127) (wt%) | PHASE SEPARATION | REFRACTIVE INDEX ON SURFACE LAYER | SURFACE RESISTANCE VALUE (Ω/□) | FILM THICKNESS (μm) |
| EXAMPLE 16 | $Sb_2O_5$ 2.2 | - | DCPA 64.5 | 1.3 | 2.0 | O | 1.64 | 9.80E+09 | 5.5 |
| EXAMPLE 17 | $Sb_2O_5$ 2.2 | NMMA 30 | TMPTA 64.5 | 1.3 | 2.0 | O | 1.64 | 5.60E+09 | 5.5 |
| EXAMPLE 18 | $Sb_2O_5$ 2.2 | NMMA 30 | ETHOXYLATED ISOCYANURIC ACID TRIACRYLATE 64.5 | 1.3 | 2.0 | V | 1.64 | 4.90E+09 | 5.5 |
| EXAMPLE 19 | $Sb_2O_5$ 2.2 | NMMA 30 | PENTAERYTHRITOL TRIACRYLATE 64.5 | 1.3 | 2.0 | O | 1.59 | 8.10E+09 | 5.5 |
| COMPARATIVE EXAMPLE 6 | $Sb_2O_5$ 2.2 | NMMA 30 | 35mol ETHOXYLATED PENTAERYTHRITOL TETRAACRYLATE 64.5 | 1.3 | 2.0 | X | 1.52 | 7.80E+09 | 5.5 |
| COMPARATIVE EXAMPLE 7 | $Sb_2O_5$ 2.2 | NMMA 30 | 20mol ETHOXYLATED GLYCERIN TRIACRYLATE 64.5 | 1.3 | 2.0 | X | 1.53 | 7.80E+09 | 5.5 |

[Fig. 11]

| | COMPONENT | | | | | EVALUATION RESULTS | | | |
|---|---|---|---|---|---|---|---|---|---|
| | METAL OXIDE PARTICLES (TYPE, ADDED AMOUNT (wt%)) | BINDER | | ANTISTATIC AGENT (PEDOT) (wt%) | PHOTOPOLY-MERIZATION INITIATOR (IRGACURE127) (wt%) | PHASE SEPARATION | REFRACTIVE INDEX ON SURFACE LAYER | SURFACE RESISTANCE VALUE (Ω/□) | FILM THICKNESS (μm) |
| | | FIRST COMPONEN (TYPE, ADDED AMOUNT (wt%)) | SECOND COMPONENT (TYPE, ADDED AMOUNT (wt%)) | | | | | | |
| EXAMPLE 20 | ATO 2.2 | NMMA 30 | TMMT 64.5 | 1.3 | 2.0 | ○ | 1.66 | 8.80E+09 | 5.5 |
| EXAMPLE 21 | PTO 2.2 | NMMA 30 | TMMT 64.5 | 1.3 | 2.0 | ○ | 1.66 | 9.10E+09 | 5.5 |
| EXAMPLE 22 | $ZrO_2$ 2.2 | NMMA 30 | TMMT 64.5 | 1.3 | 2.0 | ○ | 1.68 | 6.80E+09 | 5.5 |
| EXAMPLE 23 | $TiO_2$ 2.2 | NMMA 30 | TMMT 64.5 | 1.3 | 2.0 | ○ | 1.70 | 5.90E+09 | 5.5 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007023107 A
- JP 200935595 B
- JP 2005298716 B
- US 20110217541 A
- JP 2012245736 B